(19) Europäisches Patentamt
European Patent Office
Office européen des brevets

(11) Veröffentlichungsnummer : **0 142 014**
**B1**

(12) **EUROPÄISCHE PATENTSCHRIFT**

(45) Veröffentlichungstag der Patentschrift : **21.01.87**

(51) Int. Cl.[4] : **C 08 F 2/24**

(21) Anmeldenummer : **84112028.0**

(22) Anmeldetag : **08.10.84**

# (54) Verwendung von oberflächenaktiven tertiären Alkylaminen als Poly-merisationsemulgatoren.

(30) Priorität : **17.10.83 DE 3337640**

(43) Veröffentlichungstag der Anmeldung : **22.05.85 Patentblatt 85/21**

(45) Bekanntmachung des Hinweises auf die Patenterteilung : **21.01.87 Patentblatt 87/04**

(84) Benannte Vertragsstaaten : **AT BE CH DE FR GB LI NL**

(56) Entgegenhaltungen :
**FR-A- 1 250 727**
**US-A- 4 171 278**

(73) Patentinhaber : **Henkel Kommanditgesellschaft auf Aktien**
**Postfach 1100 Henkelstrasse 67**
**D-4000 Düsseldorf-Holthausen (DE)**

(72) Erfinder : **Höfer, Rainer, Dr.**
**Klever Strasse 31**
**D-4000 Düsseldorf 30 (DE)**

**EP 0 142 014 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung liegt auf dem Gebiet der Polymerisationsemulgatoren. Beschrieben wird die Verwendung oberflächenaktiver tertiärer Alkylamine, die durch Umsetzung langkettiger Epoxide mit Diethanolamin und anschließende Ethoxylierung sowie gewünschtenfalls Salzbildung oder Quaternierung herstellbar sind, für diesen Anwendungszweck.

Es ist bekannt, die Polymerisation von im wesentlichen wasserunlöslichen ethylenisch ungesättigten Monomeren in Gegenwart von Emulgatoren in wäßriger Dispersion durchzuführen. Als Emulgatoren wurden bereits zahlreiche, vorwiegend anionische, aber auch kationische und nichtionische Verbindungen beschrieben. Eine besonders wichtige Substanzklasse sind dabei die Umsetzungsprodukte langkettiger Verbindungen mit Ethylenoxid.

Auch zahlreiche, stickstoffhaltige Polymerisationsemulgatoren sind bereits bekannt. So wird in der Firmenschrift HOE 4200 der Hoechst AG die Verwendung von Fettaminsalzen für diese Anwendung vorgeschlagen. Fettaminsalze verlieren jedoch im basischen pH-Bereich ihre oberflächenaktiven Eigenschaften, was für viele Anwendungen auf dem Sektor Emulsionspolymerisation ungünstig ist. Dies gilt auch für ethoxylierte Fettamine, soweit ihr Ethoxylierungsgrad unter 10 liegt. Bekannt sind weiterhin ethoxylierte Fettsäureamide, hergestellt durch Amidierung von Fettsäureestern mit Ethanolamin oder Diethanolamin und anschließende Ethoxylierung. Derartige Produkte sind beispielsweise in der deutschen Offenlegungsschrift 23 33 417 beschrieben. Nachteilig ist hier die Hydrolysierbarkeit der Amidfunktion, die zu einem langsamen Verlust der Oberflächenaktivität durch Hydrolyse führen kann. Weiterhin bekannt sind Anlagerungsprodukte von Ethylenoxid und/oder Propylenoxid an aliphatische Diamine. Derartige Produkte werden zum Beispiel in der US-Patentschrift 2 979 528 beschrieben. Sie gelten jedoch als nicht biologisch abbaubar.

Auf dem hier angesprochenen Gebiet der Technik ist es für den Fachmann nicht möglich, aus der chemischen Struktur einer Substanz genaue Rückschlüsse auf ihre Eignung bei der Emulsionspolymerisation zu ziehen. Aufgrund der zahlreichen Anforderungen, die heute an Polymerdispersionen gestellt werden, besteht daher laufend Bedarf nach neuen Polymerisationsemulgatoren, insbesondere nach neuen N-haltigen Polymerisationsemulgatoren. Für manche Anwendungen werden Produkte gesucht, die durch Änderung des pH-Wertes ihre oberflächenaktiven Eigenschaften ändern können.

Von dieser Aufgabe ausgehend ist Gegenstand der Erfindung die Verwendung von oberflächenaktiven tertiären Alkylaminen der allgemeinen Formel :

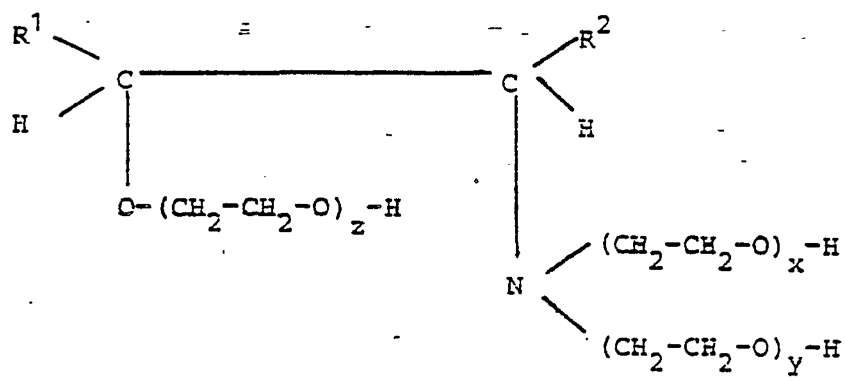

in der $R^1$ und $R^2$ Wasserstoff oder eine lineare Alkylgruppe bedeuten, wobei $R^1$ und $R^2$ zusammengenommen 6-22 C-Atome aufweisen und x, y, z ganze Zahlen zwischen 0 und 210 sind, deren Summe 10 bis 210 beträgt und/oder ihrer Umsetzungsprodukte mit Mineralsäuren oder mit Alkylierungsmitteln, die bis zu 3 C-Atome aufweisen als Emulgatoren oder Coemulgatoren bei der Emulsionspolymerisation ethylenisch ungesättigter Monomerer und zur Stabilisierung von Dispersionen und von durch Emulsionspolymerisation gewonnenen Latices.

Die erfindungsgemäß verwendeten, oberflächenaktiven tertiären Alkylamine der obenstehenden Formel sind bereits bekannt. Sie werden beispielsweise in der Deutschen Offenlegungsschrift 27 03 020 als Bestandteile von Waschmitteln beschrieben. Ihre Verwendung im Sinne der Erfindung ist jedoch nicht bekannt.

Bei den erfindungsgemäß verwendeten, oberflächenaktiven tertiären Alkylaminen der vorgenannten Formel handelt es sich um Verbindungen, die in ein- oder zweistufiger Reaktion aus endständigen oder innenständigen Epoxyalkanen mit 8-24 C-Atomen hergestellt werden können, indem man zunächst mit Ammoniak, Ethanolamin oder Diethanolamin zum β-Hydroxyalkylamin umsetzt und anschließend ethoxyliert sowie daraufhin gewünschtenfalls mit Mineralsäuren oder Alkylierungsmitteln mit bis zu 3 C-Atomen umsetzt.

Die als Ausgangsstoffe eingesetzten Epoxyalkane werden in an sich bekannte Weise durch Epoxydation der entsprechenden Olefine, zum Beispiel mit Persäuren erhalten. Die innenständigen

Epoxyalkane erhält man aus Olefingemischen, die durch katalytische Dehydrierung oder durch Chlorierung/Dehydrochlorierung von linearen Paraffinen und selektiver Extraktion der Mono-Olefine erhalten wurden. Mono-Olefine mit innenständiger Doppelbindung können aber auch durch Isomerisierung von endständigen Olefinen hergestellt werden. Zu den 1,2-Epoxyalkanen kommt man über endständige Mono-Olefine, die beispielsweise durch Polymerisation von Ethylen mit organischen Aluminiumverbindungen als Katalysatoren oder durch thermisches Cracken von Paraffinwachs erhalten werden. Zur Herstellung der erfindungsgemäß verwendeten oberflächenaktiven tertiären Alkylamine wird bevorzugt von Epoxyalkanen mit 8-24 und insbesondere mit 10-18 Kohlenstoffatomen ausgegangen. Dabei liegen die innenständigen Epoxyalkane vorzugsweise als destillativ fraktionierte Gemische unterschiedlicher Kettenlänge vor. Typische Gemische haben etwa die folgende Zusammensetzung :

$C_{11}$-$C_{14}$-Fraktion :

22 Gew.-% 1,2-Epoxyalkan $C_{11}$
30 Gew.-% 1,2-Epoxyalkan $C_{12}$
26 Gew.-% 1,2-Epoxyalkan $C_{13}$ und
22 Gew.-% 1,2-Epoxyalkan $C_{14}$.

$C_{15}$-$C_{18}$-Fraktion :

16 Gew.-% 1,2-Epoxyalkan $C_{15}$
32 Gew.-% 1,2-Epoxyalkan $C_{16}$
43 Gew.-% 1,2-Epoxyalkan $C_{17}$ und
9 Gew.-% 1,2-Epoxyalkan $C_{18}$.

Die endständigen Epoxyalkane werden bevorzugt als $C_{12}$/$C_{14}$-Fraktion oder $C_{16}$/$C_{18}$-Fraktion eingesetzt.

Zur Herstellung der erfindungsgemäß eingesetzten Verbindungen werden die Epoxyalkane in an sich bekannter Weise mit Ammoniak, Ethanolamin oder Diethanolamin umgesetzt. Die Umsetzung mit Ammoniak findet bei einem 10 bis 20 molaren Überschuß an Ammoniak und bei einem Druck von 40 bis 150 Atmosphären und Temperaturen zwischen 160 und 220 °C statt. Unter diesen Bedingungen, jedoch vorzugsweise drucklos, kann auch die Umsetzung mit Monoethanolamin oder Diethanolamin geführt werden.

Zur Ethoxylierung der so erhaltenen Hydroxyalkylamine wird mit der gewünschten Menge an Ethylenoxid bei Temperaturen zwischen 80 und 140 °C und gewünschtenfalls unter basischer Katalyse (Alkalimetallhydroxide, Erdalkalimetallhydroxide) umgesetzt. Pro mol Hydroxyalkylamin wird mit 10 bis 210 mol Ethylenoxid umgesetzt. Bevorzugt sind 20 bis 160 und insbesondere 35 bis 150 mol. Die Summe der Zahlen x, y, z der allgemeinen Formel entspricht der Anzahl der eingesetzten mol Ethylenoxid.

Zur besseren Handhabung werden die erfindungsgemäß eingesetzten oberflächenaktiven, tertiären Alkylamine in Wasser gelöst. Vorzugsweise werden die Lösungen so weit verdünnt, bis sie leicht beweglich und dosierbar sind. Hierzu sind im allgemeinen Lösungen mit 20 bis 50 Gew.-% Feststoffgehalt geeignet. Vor oder nach dem Lösen können die Amine in ihre Salze überführt werden. Dazu wird in bekannter Weise mit Säuren, zum Beispiel Mineralsäuren, neutralisiert. Geeignete Mineralsäuren sind Halogenwasserstoffsäuren, insbesondere Chlorwasserstoff und Bromwasserstoff sowie auch Schwefelsäure oder Phosphorsäure.

Die oberflächenaktiven tertiären Alkylamine können auch in bekannter Weise in die quartären Ammoniumverbindungen überführt werden. Hierzu sind Alkylierungsmittel mit bis zu 3 C-Atomen geeignet. Bevorzugt sind : Methylchlorid, Methylbromid, Methyliodid, Dimethylsufat, Ethylchlorid, Ethylbromid, Isopropylchlorid, Isopropylbromid sowie Propylchlorid und Propylbromid. Die Quaternierung kann bei der Verwendung von Dimethylsufat drucklos und ohne Überschuß an Quaternierungsmittel ausgeführt werden. Bei den anderen genannten Quaternierungsmitteln wird unter Druck bei Temperaturen bis zu 100 °C und gewünschtenfalls einem 0,1 bis 2 molaren Überschuß des Quaternierungsmittels gearbeitet.

In der folgenden Beschreibung der Verwendung werden unter dem Begriff oberflächenaktive Alkylamine auch die Salze mit Mineralsäuren sowie die quartären Ammoniumverbindungen verstanden.

Erfindungsgemäß können die oberflächenaktiven tertiären Amine bei der Emulsionspolymerisation einer Vielzahl wasserunlöslicher oder teilweise wasserunlöslicher Monomere verwendet werden. So können die Produkte nach einer ersten Ausführungsform der Erfindung bei der Emulsionspolymerisation von Vinylaromaten wie beispielsweise Styrol, Divinylbenzol oder Vinyltoluol eingesetzt werden. Weiterhin bei der Emulsionspolymerisation von polymerisierbaren Olefinen und Diolefinen wie Propen, Butadien oder Isopren.

Nach einer weiteren Ausführungsform der Erfindung werden die oberflächenaktiven tertiären-Alkylamine bei der Emulsionspolymerisation von Estern der Acrylsäure oder der Methacrylsäure mit linearen oder verzweigten Alkoholen mit 1 bis 16 C-Atome, insbesondere bei Estern der genannten Säuren mit $C_1$ bis $C_8$-Alkoholen und vorzugsweise bei deren Methylestern, Ethylestern oder Butylestern

eingesetzt.

Eine weitere Ausführungsform der Erfindung betrifft den Einsatz der tertiären oberflächenaktiven Alkylamine bei der Emulsionspolymerisation von Vinylestern von Säuren mit 2 bis 12 C-Atomen. Geeignete Monomere sind insbesondere Vinylacetat, Vinylpropionat sowie Vinyl-2-Ethylhexanat. Weiterhin können Vinylalkylether, die Alkylgruppen mit 1 bis 6 C-Atomen aufweisen, der Emulsionspolymerisation unterworfen werden. Geeignet sind die Produkte fernerhin für die Polymerisation von Vinylchlorid und Vinylidenchlorid.

Die vorgenannten Monomeren können in Gegenwart der oberflächenaktiven Alkylamine der Homopolymerisation oder der Copolymerisation mit anderen der genannten Verbindungen unterworfen werden. Weiterhin können Emulsionscopolymerisationen durchgeführt werden, bei denen bis zu 50 Gewichtsprozent weiterer an sich teilweise oder vollständig wasserlöslicher Monomerer zugegen sind. Hierfür kommen die folgenden Monomeren in Frage : Acrylnitril, Methacrylnitril, Halbester der Maleinsäure beziehungsweise Fumarsäure mit 1 bis 8 C-Atomen, Acrylsäure, Methacrylsäure, Maleinsäure, Fumarsäure, Crotonsäure und/oder Itaconsäure.

Die unter erfindungsgemäßer Verwendung der oberflächenaktiven Alkylamine hergestellten Dispersionen enthalten diese in Mengen von vorzugsweise 0,5 bis 5 Gewichtsprozent, bezogen auf Emulsion. Sie weisen ein Gewichtsverhältnis Monomerer : Wasser zwischen 1 : 5 und 2 : 1 auf. Bevorzugt liegt das Gewichtsverhältnis jedoch zwischen 1 : 3 und 1 : 1.

Erfindungsgemäß können die oberflächenaktiven Alkylamine in Gegenwart üblicher Polymerisationshilfsstoffe verwendet werden. Hier sind in erster Linie die Initiatoren zu nennen. Verwendet werden können anorganische Peroxidverbindungen wie zum Beispiel Calium- oder Ammoniumpersulfat oder Wasserstoffperoxid. Weiterhin können organische Peroxidverbindungen oder organische Azoverbindungen, soweit sie für die Emulsionspolymerisation geeignet sind, verwendet werden. Die Initiatoren werden in üblichen Mengen das heißt von 0,05 bis 2 Gewichtsprozent, vorzugsweise von 0,1 bis 0,5 Gewichtsprozent eingesetzt. Als weitere Hilfsstoffe seien Puffersubstanzen wie Natriumhydrogencarbonat, Natriumpyrophosphat, Ammoniumchlorid oder Natriumacetat, die in Mengen bis zu 2 Gewichtsprozent eingesetzt werden können, genannt. Auch Beschleuniger wie Formaldehydsulfoxylat können verwendet werden.

Erfindungsgemäß können weiterhin die oberflächenaktiven Alkylamine zusammen mit üblichen, bei der Emulsionspolymerisation verwendeten Molekulargewichtsreglern, beispielsweise Butenol oder auch organischen Thioverbindungen wie Mercaptoethanol, Thioglykolsäure, Octylmercaptan oder tert.Dodecylmercaptan verwendet werden.

Erfindungsgemäß sind die oberflächenaktiven Alkylamine als alleinige Emulgatoren (Primäremulgatoren) geeignet.

In der Praxis kann es jedoch vorteilhaft sein, sie in Kombination mit herkömmlichen kationischen, nichtionischen oder auch anionischen Emulgatoren zu verwenden.

Kationische Emulgatoren beziehungsweise nichtionische Emulgatoren, die sich zur Kombination anbieten sind Fettaminsalze, zum Beispiel Salze von $C_{12}$-$C_{18}$-Aminen mit Mineralsäuren, weiterhin ethoxylierte Fettamine, Fettsäuremonoethanolamide sowie Diethanolamide und die daraus herstellbaren Quaternierungsprodukte sowie auch Addukte von Ethylenoxid und/oder Propylenoxid an aliphatische Diamine, beispielsweise die unter dem Markennamen Tetronics® angebotenen Produkte.

Als weitere nichtionogene Emulgatoren, die mit den erfindungsgemäß verwendeten Produkten kombiniert werden können, seien insbesondere Alkylphenol- oder Fettalkoholoxethylate genannt.

Auch die Kombination der erfindungsgemäß eingesetzten Substanzen mit anionischen Emulgatoren liefert günstige Ergebnisse. In wenigen Fällen kann es jedoch zu Unverträglichkeiten (Ausfällungen) kommen, so daß der Fachmann zweckmäßigerweise durch einen Vorversuch feststellt, ob der speziell gewählte anionische Emulgator mit dem erfindungsgemäßen oberflächenaktiven Alkylamin verträglich ist. Eine derartige Vorprobe kann durchgeführt werden, indem etwa 1%ige wäßrige Lösungen der beiden Emulgiermittel gemischt werden und beobachtet wird, ob dabei Niederschläge und Ausfällungen entstehen. Als anionenaktive Emulgatoren können mit den erfindungsgemäß verwendeten oberflächenaktiven Alkylaminen Seifen natürlicher oder synthetischer Fettsäuren, disproportionierte Harzseifen, wasserlösliche Salze verzweigter Monocarbonsäuren (hergestellt beispielsweise durch die sogennante Guerbetreaktion) Fettalkoholsulfate, Fettalkoholethersulfate, Alkylphenolethersulfate und -sulfonate, Alkylbenzolsulfonate, Praffinsulfonate und/oder Alkylnaphthalinsulfonate verwendet werden. Weiterhin geeignet sind wasserlösliche Salze sulfierter Öle, Fette, Fettsäuren, Fettsäure $C_{12}$ bis $C_{18}$-Alkylester, Fettsäureethoxylate, Fettsäurealkanolamide. Geeignet sind fernerhin Sulfobernsteinsäurehalbester beziehungsweise Sulfobernsteinsäurediester in Form ihrer Natrium- oder Ammoniumsalze, weiterhin Alkyl- oder Alkylphenol(ether)-phosphate, Alkylisethionate sowie Kondensationsprodukte von Oxy- und Aminoalkanolsulfonsäuren und/oder Alkyldiphenylethersulfonate.

Die Durchführung der Emulsionspolymerisationsverfahren unter erfindungsgemäßer Verwendung oberflächenaktiver Alkylamine kann in verschiedener Weise erfolgen.

So kann zum Beispiel die gesamte Emulsion vorgelegt und polymerisiert werden, es kann nach einem Monomer-Zulaufverfahren oder nach einem Emulsions-Zulaufverfahren gearbeitet werden. Im allgemeinen wird die Temperatur des Polymerisationsmediums in einem Bereich von 40 bis 100 °C, vorzugsweise 50 bis 90 °C, gehalten. Als pH-Wert wird zweckmäßigerweise ein Bereich zwischen 3 und 9 eingestellt. Je

nach verwendeten Monomeren wird drucklos oder unter Druck (bei zum Beispiel Vinylchlorid, oder Butadien) gearbeitet.

Die Emulsionspolymerisationsverfahren werden zweckmäßigerweise in kühl- und heizbaren, mit Rührer und Temperaturmessung versehenen Behältern, beispielsweise in Rührdruckkesseln, durchgeführt. Die Verwendung von Rohrschlangenreaktoren oder sogenannten Loopreaktoren ist jedoch ebenfalls möglich.

Die unter erfindungsgemäßer Verwendung der oberflächenaktiven Alkylamine hergestellten Polymerdispersionen werden nach Polymerisationsende zweckmäßigerweise abgekühlt und über Siebeinrichtungen aus dem Kessel gelassen. Soll das Festprodukt isoliert werden, dann wird die Polymerisatdispersion zweckmäßigerweise ausgefällt oder sprühgetrocknet, bevorzugt jedoch ist eine direkte Verwendung der Dispersionen, beispielsweise als Bindemittel für Klebstoff- oder Beschichtungszwecke.

Unter erfindungsgemäßer Verwendung der oberflächenaktiven Alkylamine lassen sich stabile, koagulatarme Dispersionen herstellen. Ein Vorteil der Emulgatoren liegt in ihrer im Vergleich zu Fettaminen geringen und mit höherem Ethoxylierungsgrad weiterhin fallenden Toxizität. So sind erfindungsgemäße Emulgatoren auf Basis eines $C_{12}/C_{14}$ Epoxid-Diethanolamins, umgesetzt mit 28 mol Ethylenoxid, für Fische und Wasserorganismen sehr gut verträglich.

Beispiel I

Copolymerisation von Vinylacetat-Vinylversatat

| Beispiel | Ia | Ib | Ic |
|---|---|---|---|
| Lösung 1 | (Mengenangaben in g) | | |
| dest. Wasser | 250 | 250 | 250 |
| anionaktiver Emulgator | 5,0 | 5,0 | 5,0 |
| Kaliumperoxodisulfat | 0,5 | 0,5 | 0,5 |
| Borax | 0,5 | 0,5 | 0,5 |
| Lösung 2 | | | |
| dest. Wasser | 243 | 243 | 243 |
| anionaktiver Emulgator | 6,0 | 6,0 | 6,0 |
| erfindungsgemäßer Emulgator | 12,0 | 12,0 | - |
| nichtionogener Emulgator | - | - | 12,0 |
| Kaliumperoxodisulfat | 2,0 | 2,0 | 2,0 |
| Borax | 2,0 | 2,0 | 2,0 |
| Lösung 3 | | | |
| Vinylacetat | 334 | 334 | 343 |
| Versaticsäurevinylester (VeoVa 10, Shell) | 141 | 141 | 141 |
| Acrylsäure | 4 | 4 | 4 |
| | 1000 | 1000 | 1000 |
| Koagulatanteil | 0 % | 0 % | 1 % |
| Trockenrückstand (Theorie) | 49,1 % (49,9 %) | 49,5 % (49,9 %) | 50,1 % (49,9 %) |
| Teilchengröße | ca. 0,1 µm | <0,1 µm | ca. 0,1 µm |

Als anionaktiver Emulgator wurde ein Na-α-Sulfo-$C_{16}/C_{18}$-fettsäuremethylester mit 30,0 % Aktivsubstanz und einem α-Sulfo-$C_{16}/C_{18}$-fettsäure, Di-Na-Salz-Anteil von 6 % gewählt. Geprüfte erfindungsgemäße Emulgatoren :

Ringöffnungsprodukt eines Gemisches aus
1,2-Epoxialkan $C_{12}$ (ca. 70 Gew.-%) und
1,2-Epoxialkan $C_{14}$ (ca. 30 Gew.-%) mit
Diethanolamin, umgesetzt mit

| | |
|---|---|
| Beispiel Ia | 60 Mol Ethylenoxid |
| Beispiel Ib | 100 Mol Ethylenoxid |
| Vergleichsbeispiel Ic | Talgfettalkohol + 8 EO |

Apparatur :

geschlossener beheizbarer 2 l Planschliffbecher, ausgerüstet mit V4A-Ankerrührer, Tropftrichter, Rückflußkühler und einem 2 l Vorlegegefäß mit Blattrührer.

Verfahren :

Eine Monomer-Präemulsion wird hergestellt, indem das Monomergemisch (Lösung 3) unter Rühren der wäßrigen Phase (Lösung 2) zugefügt wird. Der pH-Wert dieser Präemulsion liegt bei 3,8 bis 5,0. Die Reaktorbefüllung (Lösung 1) wird aufgeheizt und, sobald die Temperatur 80 °C erreicht hat, die Monomer-Präemulsion über einen Zeitraum von zwei bis zweieinhalb Stunden hinzugefügt. Nach beendeter Zugabe wird die Temperatur des Reaktionsgemisches weitere zwei Stunden bei 80 °C gehalten. Die Dispersion wird abgekühlt und Filtriert. Der pH-Wert wird mit einer 10 prozentigen Ammoniumcarbonatlösung auf ca. 7 eingestellt.

Anwendunstechnische Eigenschaften :

| | | Ia | Ib | Ic |
|---|---|---|---|---|
| Teilchengröße ( nm) | | 166 | 159 | 169 |
| mechanische Stabilität (% Koagulat) | | 0 | 0 | 0 |
| Brookfield-Viskosität bei 25 °C (mPa·s) | | 223 | 316 | 404 |
| Elektrolytstabilität | | | | |
| NaCl | 1prozentig | 0 | 0 | 0 |
| | 10prozentig | 0 | 0 | 100 |
| $CaCl_2$ | 1prozentig | 0 | 0 | 0 |
| | 10prozentig | 0 | 0 | 100 |
| $Al_2(SO_4)_3$, | 1prozentig | 0 | 0 | 0 |
| | 10prozentig | 100 | 0 | 100 |
| Filmbeurteilung | | | | |
| bei Raumtemperatur | | klar, transparent | | |
| bei 105 °C | | gelblich, transparent | | |
| Wasseraufnahme (%) | | 17,1 | 11,0 | 47,2+ |

+ sehr poröse Filmoberfläche nach dem Trocknen

Prüfmethoden :

1. Koagulatgehalt nach der Herstellung

Die fertiggestellte Dispersion wird durch einen tarierten Perlonsiebbeutel der Fa. Schwegmann mit 80 micron Maschenweite abgefüllt. Der Siebbeutel mit evtl. vorhandenem Koagulat wird 24 Stunden bei 105 °C getrocknet und das Koagulat durch Differenzwägung bestimmt.

2. Trockengehalt

Trockenrückstandsbestimmungen (Fa. Satorius), Typ 709 301. Der Feststoffgehalt wird bei Stufe 7

und 20 min Trockenzeit bestimmt. Die Einwaage beträgt ca. 5 g.

3. Bestimmung der Teilchengröße

Die mittlere Teilchengröße wurde durch Lichtstreuung in einem Coulter® Nano-Sizer TM bestimmt (Fa. Coulter Electronics, GmbH, Krefeld).

4. Mechanische Stabilität

80 g der Dispersion werden 30 min bei 14.000 Upm mit einem Klaxon-Rührer, Typ HM UB 2 (Klaxon Ltd.), gerührt und anschließend durch einen 80 µm Siebbeutel der Firma Schwegmann filtriert. Der Koagulatanteil wird durch Trocknung und Differenzwägung des evtl. im Siebbeutel verbliebenen Koagulates bestimmt (analog ASTM D 1076).

5. Viskosität

Die Viskosität wird mit einem Brookfield-Viskosimeter vom Typ RVT bei 20 °C gemessen.

6. Elektrolytstabilität

Je 10 ml der unverdünnten Polymerdispersion werden mit je 10 ml folgender Salz-(Elektrolyt-)-Lösungen homogen vermischt.

| | |
|---|---|
| NaCl-Lösung | 1 prozentig und 10 prozentig |
| $CaCl_2$-Lösung | 1 prozentig und 10 prozentig |
| $Al_2(SO_4)_3$-Losung | 1 prozentig und 10 prozentig |

Entstandenes Koagulat wird getrocknet und durch Differenzwägung bestimmt.

7. Filmbeurteilung

Mit einem Ziehlineal (ca. 1 mm Spalthöhe) werden zwei Filme ausgezogen.
Ein Film wird 48 Stunden bei Raumtemperatur getrocknet der andere Film 24 Stunden bei 105 °C.
Die Beurteilung erfolgt in beiden Fällen auf Farbe und Transparenz.

8. Wasseraufnahme

Ein Dispersionsfilm der Abmessungen 75 × 35 × 0,5 mm wird 48 Stunden lang bei 50 °C im Umlufttrockenschrank getrocknet, anschließend gewogen und danach in deionisiertem Wasser gelagert. Nach 24 stündiger Wasserlagerung wird der Film vorsichtig durch Betupfen mit Zellstofftüchern getrocknet und die Gewichtszunahme in % bestimmt.

## Beispiel II

n-Butylacrylat-Homopolymerisation

| | | |
|---|---|---|
| dest. Wasser | 466,89 g | Lösung 1 |
| erfindungsgemäßer Emulgator aus Beispiel I a | 22,96 g | Lösung 1 |
| Ammoniumperoxodisulfat | 1,15 g | Lösung 1 |
| n-Butylacrylat | 450,00 g | Lösung 2 |
| Methacrylsäure | 9,00 g | Lösung 2 |
| dest. Wasser | 48,85 g | Lösung 3 |
| Natriumdisulfit | 1,15 g | Lösung 3 |
| Polymerdispersion | 1000,00 g | |

Apparatur :

s. Beispiel I

Verfahren :

1,15 g Ammoniumperoxodisulfat und 22,96 g Emulgator werden in 466,89 g destilliertem Wasser im Vorlegegefäß gelöst (Lösung 1). 150 ml dieser Lösung werden in das Reaktionsgefäß gegeben. Zur restlichen Lösung 1 gibt man die Monomeren (Lösung 2) und emulgiert 15 min intensiv. 150 ml dieser Präemulsion werden ebenfalls in die Reaktionsapparatur gegeben und unter Rühren 30 min mit Stickstoff gespült. Danach läßt man aus der im Tropftrichter befindlichen Natriumdisulfit-Lösung (Lösung 3) 20 ml in das Reaktionsgefäß zulaufen und beginnt aufzuheizen. Zwischen 50 und 60 °C setzt unter Temperaturanstieg die Polymerisation ein. Nunmehr werden gleichzeitig innerhalb von 1 bis 1,5 Stunden die Monomeremulsion aus dem Vorlagegefäß und die restliche Lösung 3 zudosiert. Dabei wird die Temperatur auf 65 bis 68 °C gehalten. Anschließend wird eine Stunde bei etwa 70 °C nachgerührt und dann abgekühlt. Der pH-Wert der Emulsion wird mit 25 prozentigem Ammoniak auf ca. 6 bis 7 eingestellt. Nach Abfiltrieren geringer leicht filtrierbarer Koagulatanteile erhält man eine lagerstabile, stippenfreie Polymerdispersion mit einer Teilchengröße von ca. 0,1 µm (visuelle Beurteilung).

## Patentansprüche

1. Verwendung von oberflächenaktiven tertiären Alkylaminen der allgemeinen Formel :

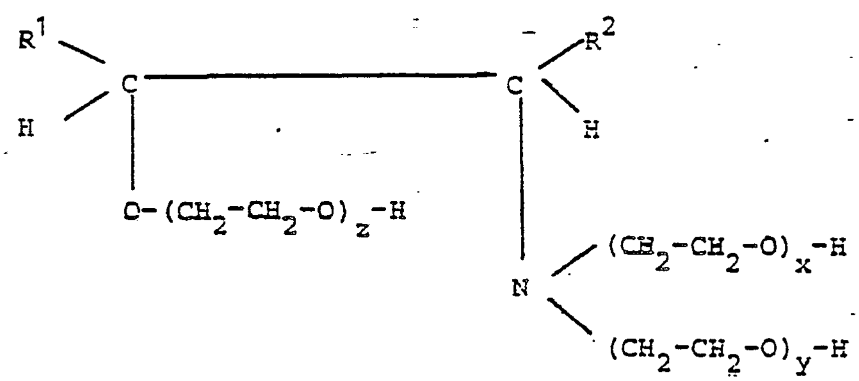

in der $R^1$ und $R^2$ Wasserstoff oder eine lineare Alkylgruppe bedeuten, wobei $R^1$ und $R^2$ zusammengenommen 6-22 C-Atome aufweisen und x, y, z ganze Zahlen zwischen 0 und 210 sind, deren Summe 10 bis 210 beträgt und/oder ihrer Umsetzungsprodukte mit Mineralsäuren oder mit Alkylierungsmitteln, die bis zu 3 C-Atome aufweisen als Emulgatoren oder Coemulgatoren bei der Emulsionspolymerisation ethylenisch ungesättigter Monomerer und zur Stabilisierung von Dispersionen und von durch Emulsionspolymerisation gewonnenen Latices.

2. Ausgestaltung nach Anspruch 1, dadurch gekennzeichnet, daß oberflächenaktive tertiäre Alkylamine verwendet werden, bei denen die Summe der Zahlen x, y, z in der allgemeinen Formel 20 bis 160, vorzugsweise 35 bis 150 beträgt.

3. Ausgestaltung nach den Ansprüchen 1 und 2, dadurch gekennzeichnet, daß oberflächenaktive tertiäre Alkylamine verwendet werden, bei denen die Reste $R^1$ und $R^2$ zusammengenommen 8 bis 16 C-Atome aufweisen, wobei vorzugsweise $R^1$ oder $R^2$ ein H-Atom ist.

4. Ausgestaltung nach den Ansprüchen 1 bis 3, dadurch gekennzeichnet, daß die Salze der oberflächenaktiven tertiären Alkylamine mit Mineralsäuren, insbesondere mit Chlorwasserstoff, Bromwasserstoff, Schwefelsäure oder Phosphorsäure verwendet werden.

5. Ausgestaltung nach den Ansprüchen 1 bis 4, dadurch gekennzeichnet, daß die Umsetzungsprodukte der oberflächenaktiven tertiären Alkylamine mit Methylhalogeniden, insbesondere Methylchlorid oder Methylbromid, Dimethylsulfat, Ethylhalogeniden oder Propylhalogeniden verwendet werden.

6. Ausgestaltung nach den Ansprüchen 1 bis 5, dadurch gekennzeichnet, daß die oberflächenaktiven tertiären Alkylamine in Mengen von 0,5 bis 5 Gewichtsprozent, bezogen auf Emulsion eingesetzt werden.

7. Ausgestaltung nach den Ansprüchen 1 bis 6, dadurch gekennzeichnet, daß die oberflächenaktiven tertiären Alkylamine und/oder ihre Umsetzungsprodukte mit Mineralsäuren oder Alkylierungsmitteln mit bis zu 3 C-Atomen in Abmischung mit weiteren nichtionischen, kationischen und/oder anionischen Emulgatoren eingesetzt werden.

## Claims

1. The use of surface-active tertiary alkylamines corresponding to the following general formula

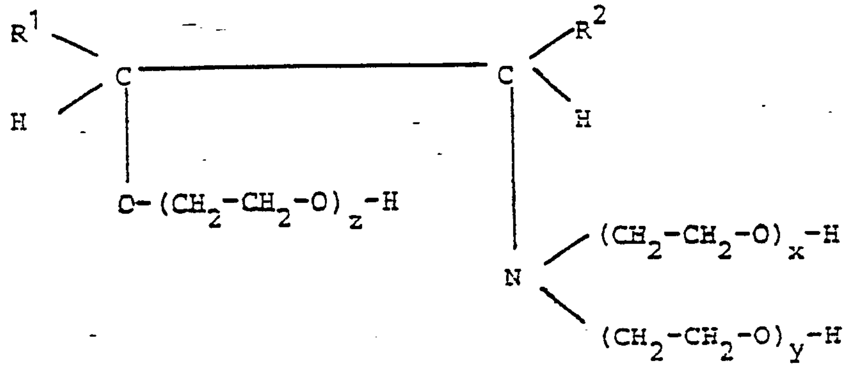

in which $R^1$ and $R^2$ represent hydrogen or a linear alkyl group, $R^1$ and $R^2$ together containing from 6 to 22 C atoms, and x, y and z are integers of from 0 to 210, of which the sum is from 10 to 210, and/or reaction products thereof with mineral acids or with alkylating agents containing up to 3 C-atoms as emulsifiers or co-emulsifiers in the emulsion polymerization of ethylenically unsaturated monomers and for the stabilization of dispersions and of latices obtained by emulsion polymerization.

2. The use claimed in Claim 1, characterized in that surface-active tertiary alkylamines in which the sum of the numbers x, y, z in the general formula is from 20 to 60 and preferably from 35 to 150 are used.

3. The use claimed in Claims 1 and 2, characterized in that surface-active tertiary alkylamines in which the substituents $R^1$ and $R^2$ together contain from 8 to 16 C-atoms, $R^1$ or $R^2$ preferably being an H-atom, are used.

4. The use claimed in Claims 1 to 3, characterized in that the salts of the surface-active tertiary alkylamines with mineral acids, more especially with hydrochloric acid, hydrobromic acid, sulfuric acid or phosphoric acid, are used.

5. The use claimed in Claims 1 to 4, characterized in that the reaction products of the surface-active tertiary alkylamines with methyl halides, more especially methyl chloride or methyl bromide, dimethyl sulfate, ethyl halides or propyl halides, are used.

6. The use claimed in Claims 1 to 5, characterized in that the surface-active tertiary alkylamines are used in quantities of from 0.5 to 5 % by weight, based on emulsion.

7. The use claimed in Claims 1 to 6, characterized in that the surface-active tertiary alkylamines and/or their reaction products with meneral acids or alkylating agents containing up to 3 C-atoms are used in admixture with other non-ionic, cationic and/or anionic emulsifiers.

**Revendications**

1. Utilisation d'alcoylamines tertiaires tensio-actives répondant à la formule générale :

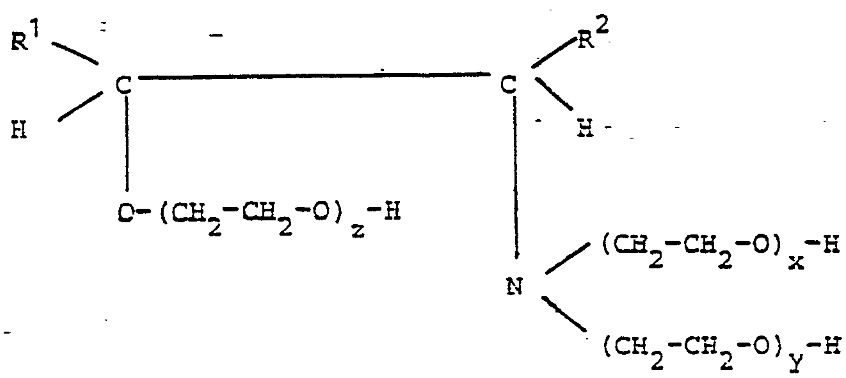

où $R^1$ et $R^2$ représentent un hydrogène ou un groupe alcoyle linéaire, $R^1$ et $R^2$ pris ensemble comportant 6 à 22 atomes de carbone, et x, y et z étant des nombres entiers entre 0 et 210, dont la somme se monte de 10 à 210 et/ou leurs produits de substitution avec des acides minéraux ou avec des agents d'alcoylation, qui présentent jusqu'à 3 atomes de carbone, comme émulsionnants ou co-émulsionnants dans la polymérisation en émulsion de monomères éthyléniquement insaturés, et pour la stabilisation de dispersions et de latex obtenus par polymérisation en émulsion.

2. Procédé suivant la revendication 1, caractérisé en ce que l'on utilise des alcoylamines tertiaires tensio-actives dans lesquelles la somme des nombres x, y et z, dans la formule générale, se monte à 20 à

160, de préférence entre 35 et 150.

3. Procédé suivant les revendications 1 et 2, caractérisé en ce que l'on utilise des alcoylamines tertiaires tensio-actives dans lesquelles les restes $R^1$ et $R^2$, pris ensemble présentent 8 à 16 atomes de carbone, $R^1$ et $R^2$ étant de préférence un atome d'hydrogène.

4. Procédé suivant les revendications 1 à 3, caractérisé en ce que l'on utilise les sels des alcoylamines tertiaires tensio-actives avec des acides minéraux, acides chlorhydrique, bromhydrique, sulfurique ou phosphorique.

5. Procédé suivant les revendications 1 à 4, caractérisé en ce que l'on utilise les produits de la réaction des alcoylamines tertiaires tensio-actives avec des halogénures de méthyl, en particulier chlorure de méthyle ou bromure de méthyle, le disulfate de méthyle, les halogénures d'éthyle, ou halogénures de propyle.

6. Procédé suivant les revendications 1 à 5, caractérisé en ce que les alcoylamines tertiaires tensio-actives sont utilisées dans des proportions de 0,5 à 5 % en poids, calculé sur l'émulsion.

7.. Procédé suivant les revendications 1 à 6, caractérisé en ce que les alcoylamines tertiaires tensio-actives et/ou les produits de leurs réactions avec des acides minéraux ou des agents d'alcoylation possédant jusqu'à 3 atomes de carbone, sont utilisées en mélange avec d'autres émulsionnants non ioniques, cationiques et/ou anioniques.